(19) Europäisches Patentamt
European Patent Office
Office européen des brevets

(11) **EP 3 604 067 A1**

(12) **EUROPEAN PATENT APPLICATION**
published in accordance with Art. 153(4) EPC

(43) Date of publication:
**05.02.2020 Bulletin 2020/06**

(51) Int Cl.:
*B60W 30/16* (2020.01)    *B60W 40/072* (2012.01)

(21) Application number: **18772402.6**

(22) Date of filing: **26.01.2018**

(86) International application number:
**PCT/JP2018/002561**

(87) International publication number:
**WO 2018/173479 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **23.03.2017  JP 2017058012**

(71) Applicant: **Hino Motors, Ltd.**
**Hino-shi, Tokyo 191-8660 (JP)**

(72) Inventors:
• **SASAKI, Yasumitsu**
  **Hino-shi**
  **Tokyo 191-8660 (JP)**
• **ISHIZAKA, Hiroyuki**
  **Hino-shi**
  **Tokyo 191-8660 (JP)**

(74) Representative: **D Young & Co LLP**
**120 Holborn**
**London EC1N 2DY (GB)**

(54) **PRECEDING-VEHICLE DETERMINATION APPARATUS AND VEHICLE CONTROL SYSTEM**

(57)    A preceding-vehicle determination apparatus includes: a vehicle speed sensor that detects a speed of a host vehicle; a preceding-vehicle detection sensor that detects a position of a preceding vehicle ahead of the host vehicle; a steering angle sensor that detects a steering angle of the host vehicle; a low speed determination unit that determines whether or not the vehicle speed of the host vehicle detected by the vehicle speed sensor is equal to or lower than a determination threshold value; a curvature-radius estimation unit that estimates a curvature radius R of a road, on which the host vehicle is traveling, based on the steering angle, when the vehicle speed is equal to or lower than the determination threshold value; a coordinate conversion unit that converts, based on the curvature radius R, the position of the preceding vehicle in a first coordinate system in which a curve corresponding to the curvature radius R is used as a reference to a position in a second coordinate system in which a straight line along a straight traveling direction of the host vehicle is used as a reference; and a host-vehicle-lane probability calculation unit that calculates a probability that the preceding vehicle is present on a host-vehicle lane, based on the position of the preceding vehicle in the second coordinate system.

*Fig.6*

## Description

## Technical Field

An aspect of the present invention relates to a preceding-vehicle determination apparatus and a vehicle control system.

## Background Art

In the related art, an in-vehicle radar apparatus that is applied to an adaptive cruise control (ACC) system determines a curvature radius of a road, on which a host vehicle is traveling, from a host-vehicle speed detected by a vehicle speed sensor and a yaw rate detected by a yaw rate sensor and determines whether or not a preceding vehicle is present ahead of the host vehicle (for example, see Patent Literature 1).

## Citation List

## Patent Literature

Patent Literature 1: Japanese Unexamined Patent Publication No. 2007-253714

## Summary of Invention

## Technical Problem

However, there is a concern that, when a host vehicle travels at a low speed, vibration of the vehicle increases, and thereby a value acquired by a yaw rate sensor fluctuates. Consequently, there is a concern that a curvature radius is also likely to fluctuate, thus, it is not possible to appropriately determine a position of a preceding vehicle on a curved road, and it is not possible to determine whether or not the preceding vehicle is present on a host-vehicle lane on which the host vehicle travels.

According to an aspect of the invention, an object thereof is to provide a preceding-vehicle determination apparatus and a vehicle control system that is capable of limiting an influence of a measurement error of a yaw rate sensor due to vibration of a vehicle and determining a probability that a preceding vehicle is present on a host-vehicle lane.

## Solution to Problem

A preceding-vehicle determination apparatus according to an aspect of the invention includes: a vehicle speed sensor that detects a speed of a host vehicle; a preceding-vehicle detection sensor that detects a position of a preceding vehicle ahead of the host vehicle; a steering angle sensor that detects a steering angle of the host vehicle; a low speed determination unit that determines whether or not the vehicle speed of the host vehicle detected by the vehicle speed sensor is equal to or lower than a determination threshold value; a curvature-radius estimation unit that estimates a curvature radius R of a road, on which the host vehicle is traveling, based on the steering angle, when the vehicle speed is equal to or lower than the determination threshold value; a coordinate conversion unit that converts, based on the curvature radius R, the position of the preceding vehicle in a first coordinate system in which a curve corresponding to the curvature radius R is used as a reference to a position in a second coordinate system in which a straight line along a straight traveling direction of the host vehicle is used as a reference; and a host-vehicle-lane probability calculation unit that calculates a probability that the preceding vehicle is present on a host-vehicle lane, based on the position of the preceding vehicle in the second coordinate system.

The preceding-vehicle determination apparatus includes the low speed determination unit and estimates the curvature radius R of the road, on which the host vehicle is traveling, based on the steering angle, when the vehicle speed of the host vehicle is equal to or lower than the determination threshold value. Hence, it is possible to estimate the curvature radius R without using a yaw rate. When the vehicle speed of the host vehicle is equal to or lower than the determination threshold value, it is possible to limit an influence of an error, even in a case where the curvature radius R of the road, on which the host vehicle is traveling, is estimated based on the steering angle. The position of the preceding vehicle is converted to the position in the second coordinate system in which the straight line along the straight traveling direction of the host vehicle is used as a reference, and thus it is possible to significantly reduce a computation load more than in the case of converting the entire coordinate system. Consequently, it is possible to determine the position of the preceding vehicle with respect to the host vehicle with high accuracy and determine the probability that the preceding vehicle is present on the host-vehicle lane.

The preceding-vehicle detection sensor may detect a first distance $L_Y$ from the host vehicle to the preceding vehicle in the straight traveling direction of the host vehicle and a second distance $L_X$ from the host vehicle to the preceding vehicle in a vehicle width direction orthogonal to the straight traveling direction. The coordinate conversion unit may calculate a distance m between the preceding vehicle and the curve corresponding to the curvature radius R, the curve passing through a center of the host vehicle in the vehicle width direction. The host-vehicle-lane probability calculation unit may calculate a probability that the preceding vehicle is present on the host-vehicle lane, based on the distance m. Consequently, it is possible to reduce the computation load and calculate the probability that the preceding vehicle is present on the host-vehicle lane, based on the second distance $L_X$ from the host vehicle to the preceding vehicle in the vehicle width direction.

The coordinate conversion unit may calculate the distance m by using Expression (1) below.
[Math. 1]

$$m=\left[L_Y{}^2+\left(|R|-|L_X|\right)^2\right]^{0.5}-|R|\cdots\ (1)$$

Consequently, it is possible to reduce the computation load and calculate the probability that the preceding vehicle is present on the host-vehicle lane.

A vehicle control system according to another aspect of the invention includes the preceding-vehicle determination apparatus. The vehicle control system further includes a preceding-vehicle presence/absence determination unit that determines whether or not the preceding vehicle is present on the host-vehicle lane, depending on a probability that the preceding vehicle is present on the host-vehicle lane, and a vehicle control unit that controls an inter-vehicular distance between the preceding vehicle and the host vehicle, when the preceding vehicle is present on the host-vehicle lane.

The host vehicle may include an engine retarder. The vehicle control unit may control the engine retarder to decelerate the host vehicle and control the inter-vehicular distance. Consequently, it is possible to limit wear of a brake shoe.

## Advantageous Effects of Invention

According to an aspect of the invention, it is possible to provide a preceding-vehicle determination apparatus and a vehicle control system that is capable of limiting an influence of a measurement error of a yaw rate sensor due to vibration of a vehicle and determining whether or not a preceding vehicle is present with high accuracy.

## Brief Description of Drawings

FIG. 1 is a side view illustrating a large-sized vehicle on which a vehicle control system of an embodiment is mounted and a preceding vehicle ahead of the large-sized vehicle.

FIG. 2 is a plan view illustrating the preceding vehicle ahead of a host vehicle.

FIG. 3 is a block configuration diagram illustrating the vehicle control system.

FIG. 4 is a block configuration diagram illustrating a cruise ECU in FIG. 2.

FIG. 5 is a schematic diagram illustrating a steering angle of the host vehicle that is traveling on a curved road and a curvature radius of the curved road.

FIG. 6 is a schematic diagram illustrating a position of the preceding vehicle on the curved road on which the host vehicle is traveling.

FIG. 7(a) is a schematic diagram illustrating the position of the preceding vehicle on the curved road.

FIG. 7(b) is a schematic diagram illustrating a position of the preceding vehicle after conversion of the position of the preceding vehicle in a coordinate system in which a straight line extending in a straight traveling direction Y is used as a reference.

FIGS. 8(a) and 8(b) are diagrams illustrating a map on which a host-vehicle-lane probability is shown.

FIG. 9 is a flowchart illustrating a process procedure in a vehicle control system.

## Description of Embodiments

Hereinafter, a preferred embodiment of the invention will be described in detail with reference to the drawings. Incidentally, in the drawings, the same reference signs are assigned to the same parts or equivalent parts, and the repeated description thereof is omitted.

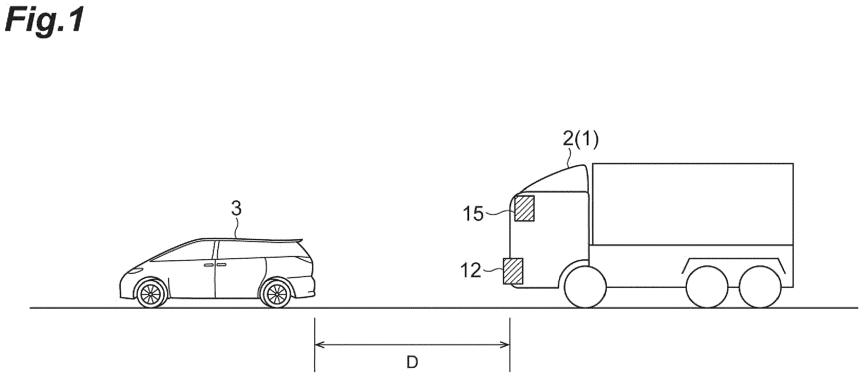

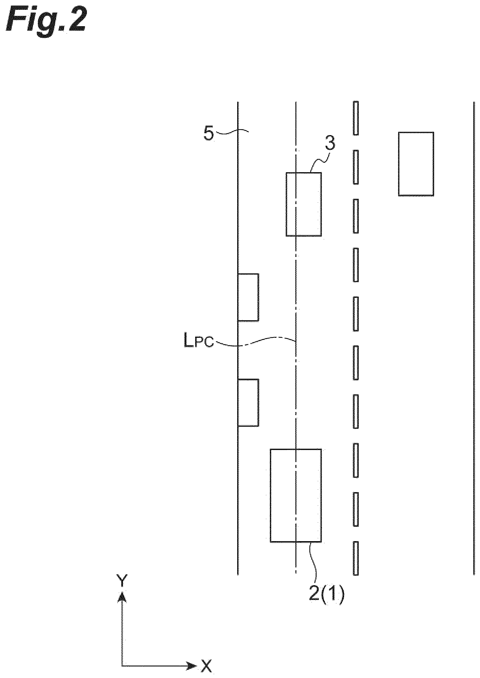

As illustrated in FIGS. 1 and 2, a vehicle control system (preceding-vehicle determination apparatus) 1 is mounted on a host vehicle 2 and has a function of assisting drive of the host vehicle 2. An example of the function executed by the vehicle control system 1 includes adaptive cruise control (ACC). The ACC allows execution of a constant speed traveling function of maintaining a vehicle speed of the host vehicle 2 (hereinafter, referred to as a "host-vehicle speed") and an inter-vehicular distance control function of controlling an inter-vehicular distance D between the host vehicle 2 and a preceding vehicle 3. The host vehicle 2 is a large-sized vehicle such as a truck, for example. The host vehicle 2 may be a bus or any vehicle such as a large-sized vehicle other than the bus, a medium-sized vehicle, an ordinary passenger vehicle, a small-sized vehicle, or a light vehicle.

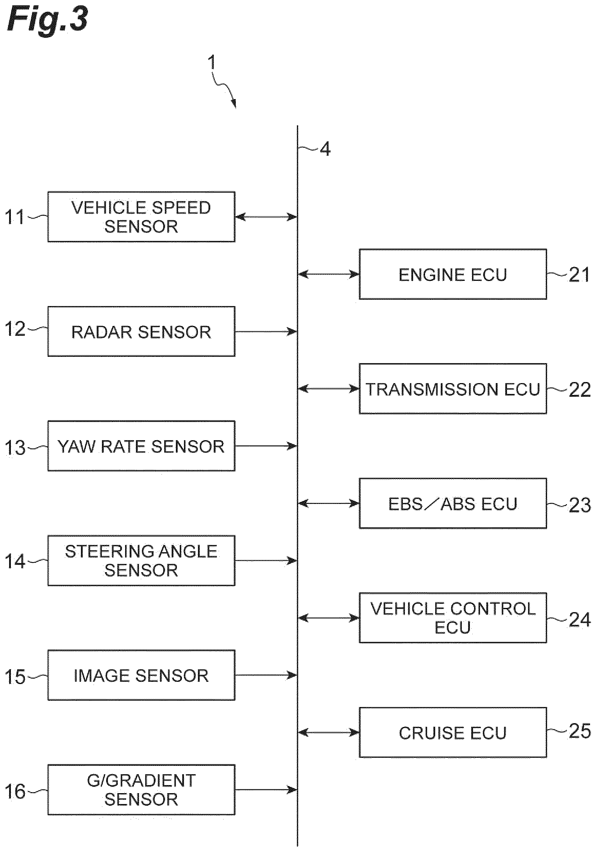

The host vehicle 2 has an in-vehicle network. As illustrated in FIG. 3, through the in-vehicle network, a plurality of electronic control units (ECU) 21 to 25 that control various functions of the host vehicle 2 are connected to each other via a communication line 4. The in-vehicle network enables data communication between the plurality of ECUs 21 to 25.

The vehicle control system 1 includes various sensors. Examples of the various sensors include a vehicle speed sensor 11, a radar sensor 12, a yaw rate sensor 13, a steering angle sensor 14, an image sensor 15, a G/gradient sensor 16, and the like. The various sensors are connected to the plurality of ECUs 21 to 25 via the communication line 4. Data acquired by the various sensors is transmitted to the plurality of ECUs 21 to 25.

The vehicle speed sensor 11 detects the host-vehicle speed. The vehicle speed sensor 11 is attached to a wheel 6 of the host vehicle 2 and detects a rotation angular velocity of the wheel.

The radar sensor 12 can use a millimeter-wave radar or a laser radar, for example. The radar sensor 12 transmits a radar wave such as a millimeter wave. The radar sensor 12 computes a distance to an object based on a time taken to receive a reflected wave obtained when the transmitted radar wave is reflected on the object. The radar sensor 12 detects an orientation of the object with respect to the host vehicle from a receiving direction of the reflected wave. Consequently, it is possible to calculate a position (x, y) of the preceding vehicle 3 ahead of the host vehicle 2.

The yaw rate sensor 13 is attached to be parallel to a vertical axis of the host vehicle 2 and detects a rotation angular velocity (yaw rate) around the vertical axis of the host vehicle 2. The steering angle sensor 14 is attached to a steering wheel, detects a steering wheel operation by a driver, and detects a steering angle (rotation angle of the steering wheel) $\theta_S$. The image sensor 15 is attached to an upper front portion of the host vehicle 2 and acquires a front image of the host vehicle 2. The G/gradient sensor 16 is horizontally attached to the vicinity of a position of the center of gravity of the host vehicle 2 and detects acceleration in a front-rear direction and acceleration in a left-right direction of the center of gravity of the host vehicle 2.

The vehicle control system 1 includes the plurality of ECUs 21 to 25. Examples of the plurality of ECUs 21 to 25 include the engine ECU 21, the transmission ECU 22, the electric brake system (EBS)/antilock brake system (ABS) ECU 23, the vehicle control ECU (vehicle control unit) 24, the cruise ECU 25, and the like. The ECU is configured of a computer including a central processing unit (CPU), a read only memory (ROM), and a random access memory (RAM).

The engine ECU 21 is a control unit, which controls an engine of the host vehicle 2, and controls an ignition timing of the engine, an amount of fuel injection, valve opening and closing, or the like, for example. The engine ECU 21 detects various items of data (for example, engine RPM, engine water temperature, or the like) for detecting a state of the engine and transmits data indicating a state of the engine.

The transmission ECU 22 is a control unit, which controls an automated manual transmission (AMT) of the host vehicle 2, and controls switching or the like of a gear of the automated manual transmission. The transmission ECU 22 detects a state of the automated manual transmission and transmits data indicating a state of the automated manual transmission.

The EBS/ABS ECU 23 is a control unit, which controls a brake, and controls an operation timing of the brake, a degree of a braking force, or the like. The EBS/ABS ECU 23 detects an operating state of the brake and transmits data indicating an operating state of the brake.

The vehicle control ECU 24 is a control unit, which controls the entire vehicle, and controls the plurality of ECUs to perform control or the like related to a drive assist. The vehicle control ECU 24 receives data related to a state of the vehicle from the plurality of ECUs and transmits data related to a command signal to the plurality of ECUs.

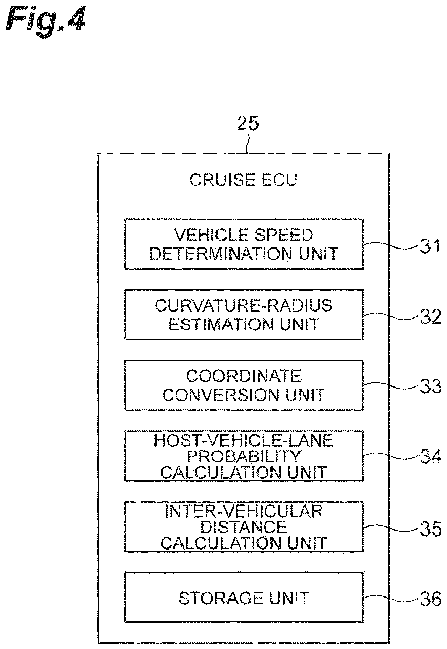

The cruise ECU 25 is a control unit, which controls the ACC, and, for example, controls the plurality of ECUs 21 to 25 to perform the constant speed traveling control and the inter-vehicular distance control. As illustrated in FIG. 4, the cruise ECU 25 includes a vehicle speed determination unit (low speed determination unit) 31, a curvature-radius estimation unit 32, a coordinate conversion unit 33, a host-vehicle-lane probability calculation unit (preceding-vehicle presence/absence determination unit) 34, an inter-vehicular distance calculation unit 35, and a storage unit 36.

The vehicle speed determination unit 31 determines whether or not the host-vehicle speed of the host vehicle 2 detected by the vehicle speed sensor 11 is equal to or lower than a determination threshold value. The determination threshold value is 40 km/h, for example.

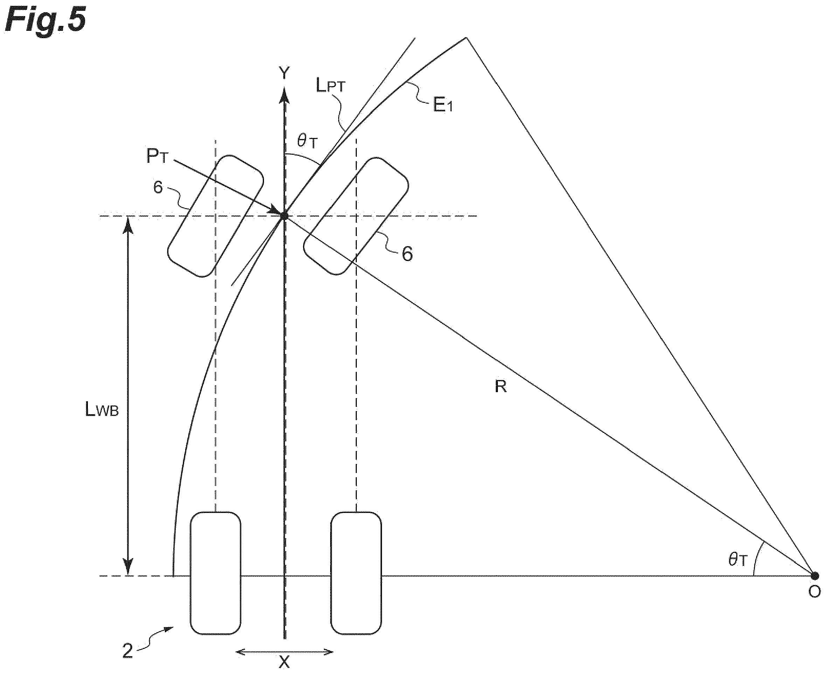

When the host vehicle 2 travels on a curved road, and the host-vehicle speed is equal to or lower than the determination threshold value, the curvature-radius estimation unit 32 estimates a curvature radius R of a road, on which the host vehicle 2 is traveling, based on a tire angle $\theta_T$ to be described below, as illustrated in FIG. 5. The detailed description thereof is as follows. When the host vehicle 2 travels on the curved road, and the host-vehicle speed is higher than the determination threshold value, the curvature-radius estimation unit 32 estimates the curvature radius R of the curved road, on which the host vehicle 2 is traveling, based on the yaw rate detected by the yaw rate sensor 13 and the host-vehicle speed detected by the vehicle speed sensor 11.

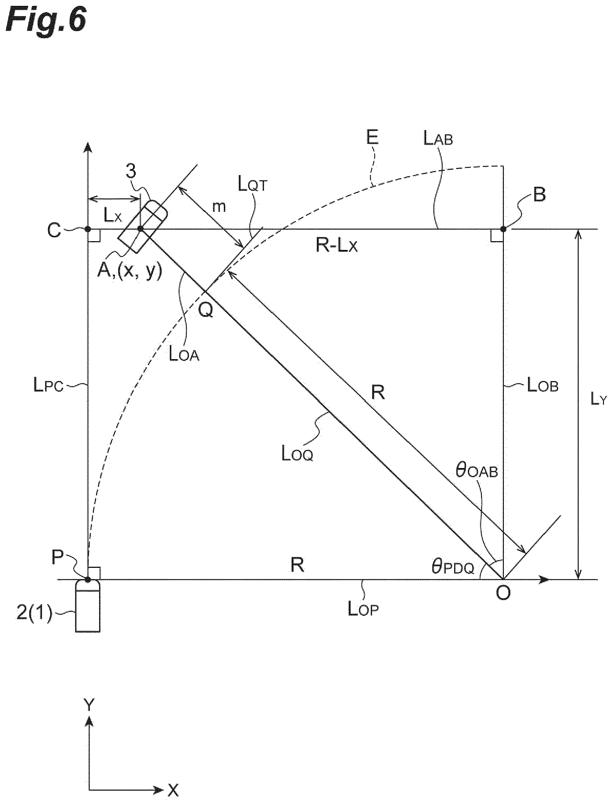

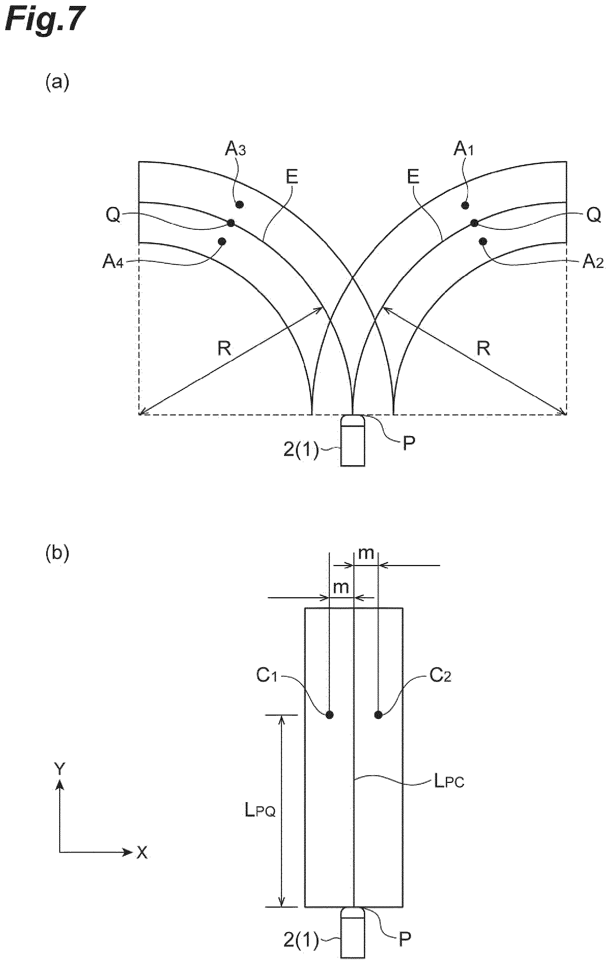

As illustrated in FIG. 6, the coordinate conversion unit 33 converts a position A of the preceding vehicle 3 in a first coordinate system in which a curve (estimated centerline E) corresponding to the curved road is used as a reference to a position in a second coordinate system in which a straight line $L_{PC}$ along a straight traveling direction Y of the host vehicle 2 is used as a reference. For example, the coordinate conversion unit 33 converts positions $A_1$, $A_2$, $A_3$, and $A_4$ of the preceding vehicle 3 in the first coordinate system illustrated in FIG. 7(a) to positions $C_1$ and $C_2$ in the second coordinate system illustrated in FIG. 7(b).

The host-vehicle-lane probability calculation unit 34 calculates a probability (host-vehicle-lane probability) that the preceding vehicle

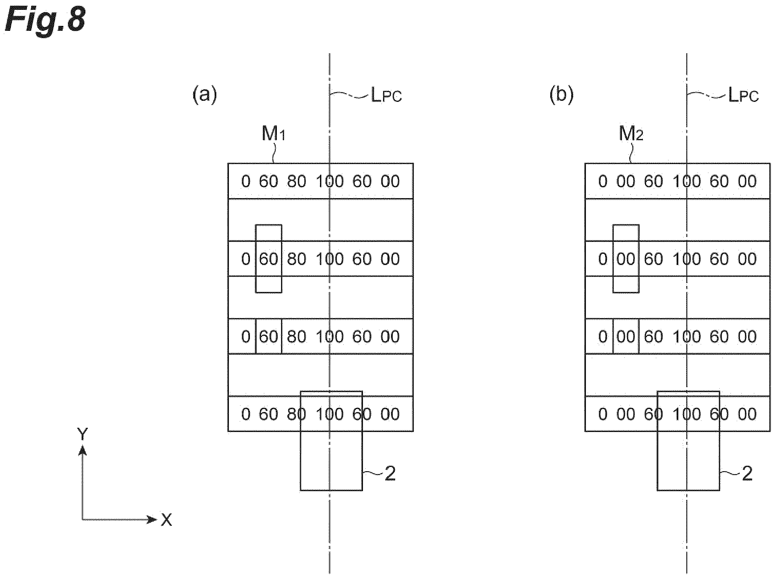

(other vehicle) 3 ahead of the host vehicle 2 is present on the host-vehicle lane. The host-vehicle-lane probability calculation unit 34 collates the position A of the preceding vehicle 3 with host-vehicle-lane probability calculating maps $M_1$ and $M_2$ (refer to FIG. 8) so as to calculate a probability that the preceding vehicle 3 is present on the host-vehicle lane 5. The host-vehicle-lane probability calculation unit 34 calculates the probability that the preceding vehicle 3 is present on the host-vehicle lane 5, based on a distance m from the host vehicle 2 to the preceding vehicle 3 in a vehicle width direction X orthogonal to the straight traveling direction Y of the host vehicle 2.

For example, on the host-vehicle-lane probability calculating maps $M_1$ and $M_2$ illustrated in FIG. 8, a numerical value indicating the host-vehicle-lane probability is set based on the distance m (refer to FIG. 6) from the host vehicle 2 to the preceding vehicle 3 in the vehicle width direction X. For example, when the preceding vehicle 3 is present in front of the host vehicle 2, the host-vehicle-lane probability is set to 100 [%]. As the preceding vehicle 3 is separated from the host vehicle 2 in the vehicle width direction X, the host-vehicle-lane probability is reduced to 80 [%], 60 [%], or 0 [%]. Incidentally, the host-vehicle-lane probability may change depending on whether a target object such as the preceding vehicle 3 is present on the right side of the host vehicle 2 or the target object is present on the left side of the host vehicle 2.

The host-vehicle-lane probability calculation unit 34 may change the host-vehicle-lane probability depending on whether or not the host vehicle 2 travels on a general road. The host-vehicle-lane probability calculation unit 34 may change the host-vehicle-lane probability depending on whether or not the host vehicle travels on a limited highway (for example, expressway). For example, the host-vehicle-lane probability calculating map $M_1$ illustrated in FIG. 8(a) is applied, when the host vehicle 2 travels on the expressway. The host-vehicle-lane probability calculating map $M_2$ illustrated in FIG. 8(b) is applied, when the host vehicle 2 travels on the general way. For example, on the general road, there is a concern that a bicycle, a pedestrian, or the like will be present on the left (sidewalk side) of a host-vehicle position, and there is a low possibility that a vehicle travels on the left thereof. Hence, a low host-vehicle-lane probability is set (for example, 0 [%]). On the expressway, there is no concern that a bicycle, a pedestrian, or the like will be present on the left of the host-vehicle position, and there is a possibility that a vehicle travels on the left thereof. Hence, a relatively high host-vehicle-lane probability is set (for example, 60 [%]).

The inter-vehicular distance calculation unit 35 calculates the inter-vehicular distance D between the host vehicle 2 and the preceding vehicle 3. The inter-vehicular distance calculation unit 35 calculates the inter-vehicular distance D (refer to FIG. 1) between the host vehicle 2 and the preceding vehicle 3, based on the position of the preceding vehicle 3 acquired by the radar sensor 12. Calculation of the inter-vehicular distance D when the host vehicle 2 is traveling on the curved road will be described below.

In the storage unit 36, the host-vehicle-lane probability calculating maps $M_1$ and $M_2$ are stored, for example. In the storage unit 36, data to be used for estimating the curvature radius R is stored. An example of the data to be used for estimating the curvature radius R includes data related to a wheel base $L_{WB}$ (refer to FIG. 5) of the host vehicle 2.

The cruise ECU 25 transmits command signals to the ECUs 21 to 24 so as to control the host vehicle 2 that needs to maintain the inter-vehicular distance D between the preceding vehicle 3 and the host vehicle 2. The cruise ECU 25 transmits the command signals to the ECUs 21 to 24 so as to control the host-vehicle speed at a constant speed.

The cruise ECU 25 transmits a command signal to the engine ECU 21 so as to control an engine output. The cruise ECU 25 transmits a command signal to the transmission ECU 22 so as to control a transmission. The cruise ECU 25 controls the EBS/ABS ECU 23 so as to control the brake.

The host vehicle 2 includes an engine retarder. The engine retarder opens an exhaust valve between an end of an intake stroke and a start of a compression stroke of the engine and allows high-pressure exhaust in an exhaust pipe to flow back to a cylinder. Consequently, a compression pressure in the cylinder increases such that an effect of an exhaust brake increases. The exhaust brake increases exhaust resistance of the engine, thereby increasing an effect of an engine brake. The cruise ECU 25 transmits a command signal to the vehicle control ECU 24. The vehicle control ECU 24 operates the engine retarder so as to decelerate the host vehicle 2 based on the command signal. Consequently, the brake of the host vehicle 2 is less frequently used, and wear of a brake shoe is limited.

Next, a method of calculating the curvature radius R by using Ackermann's formula will be described with reference to FIG. 5. A midpoint $P_T$ illustrated in FIG. 5 is a tread midpoint that is a center point between right and left front wheels (wheels 6). The curvature radius R is a distance from a center point O of a circle $E_1$ including an arc on which the host vehicle 2 turns to the midpoint $P_T$. The tire angle $\theta_T$ is an angle formed between a straight line along the straight traveling direction Y of the host vehicle 2 at the midpoint $P_T$ and a tangential line $L_{PT}$ of the circle $E_1$. The wheel base $L_{WB}$ of the host vehicle 2 is a distance between a front axle and a rear axle. In this case, the curvature radius R can be expressed by Expression (2) below.
[Math. 2]

$$R = \frac{L_{WB}}{\sin \theta_T} \cdots (2)$$

In this case, when "$\theta_S$" represents a steering angle (wheel-steering angle), and "K" represents a damping coefficient of steering, the tire angle $\theta_T$ can be expressed by Expression (3) below. Incidentally, the damping coefficient K of steering is a vehicle specific value and can be measured. For example, the damping coefficient K of steering is 1/20.
[Math. 3]

$$\theta_T = K\theta_S \cdots (3)$$

Expression (3) is substituted in Expression (2) such that the tire angle $\theta_T$ can be expressed by Expression (4) below.
[Math. 4]

$$R = \frac{L_{WB}}{\sin(K\theta_S)} \cdots (4)$$

Consequently, it is possible to calculate the curvature radius (turning radius of the circle $E_1$) R of the arc on which the host vehicle 2 travels, by using the wheel base $L_{WB}$ and the steering angle $\theta_S$ of the host vehicle 2.

Next, with reference to FIG. 6, a computation expression for converting the position of the preceding vehicle 3 that travels on the curved road having the curvature radius R to a position on a map (coordinate system) with the straight traveling direction Y as a reference will be described. First, the case of calculating the distance m (in a horizontal direction) from the estimated centerline E of the host vehicle 2 to the preceding vehicle 3 is described. The distance m means a distance between the estimated centerline E and the preceding vehicle 3 in a direction orthogonal to an estimated traveling direction of the preceding vehicle 3. For example, the distance m may be a distance between the estimated centerline E and the center of the preceding vehicle 3 in the vehicle width direction. The estimated traveling direction is a direction along a curve E or a direction along a straight line $L_{QT}$, for example.

The position (x, y) of the preceding vehicle 3 detected by the radar sensor 12 is located at $L_Y$ (= y) representing a distance (first distance) of the host vehicle 2 in the straight traveling direction Y and $L_X$ (= x) representing a distance (second distance) in the vehicle width direction X orthogonal to the straight traveling direction Y. Incidentally, a sign of $L_X$ when the preceding vehicle 3 is present on the right from the center of the host vehicle 2 in the vehicle width direction X is set to "plus". A sign of $L_X$ when the preceding vehicle 3 is present on the left from the center of the host vehicle 2 in the vehicle width direction X is set to "minus". R represents an estimated curvature radius of the curved road, on which the host vehicle 2 is traveling. Incidentally, a sign of the curvature radius R when the road has a right-hand curve is set to "plus". A sign of the curvature radius R when the road has a left-hand curve is set to "minus".

As illustrated in FIG. 6, the position of the preceding vehicle 3 is set as a point A, and a center point of a virtual circle of the curved road having the curvature radius R is set as the point O. An intersection point of a straight line $L_{OB}$ with a straight line $L_{AB}$ is set as a point B. The straight line $L_{OB}$ is parallel to the straight traveling direction Y, the straight line $L_{OB}$ passing through the center point O. The straight line $L_{AB}$ is parallel to the vehicle width direction X, the straight line $L_{AB}$ passing through the position A of the preceding vehicle 3. Lengths of sides (OA, OB, and AB) of a right triangle with the points O, A, and B as vertexes can be expressed by Expressions (5) to (7) below.
[Math. 5]

$$OA = |R| + m \cdots (5)$$

$$OB = L_Y \cdots (6)$$

$$AB = |R| - |L_X| \cdots (7)$$

The lengths of the sides (OA, OB, and AB) of the right triangle satisfy Expression (8) below.
[Math. 6]

$$OA = \left(OB^2 + AB^2\right)^{0.5} \cdots (8)$$

When Expressions (5) to (7) are substituted in Expression (8), Expression (9) below is obtained.
[Math. 7]

$$|R| + m = \left[L_Y^2 + \left(|R| - |L_X|\right)^2\right]^{0.5} \cdots (9)$$

Hence, it is possible to calculate m by using Expression (1) below.
[Math. 8]

$$m = \left[L_Y^2 + \left(|R| - |L_X|\right)^2\right]^{0.5} - |R| \cdots (1)$$

Here, O represents the center point of the virtual circle having the curvature radius R, and P represents a position of the host vehicle 2. Q represents an intersection point of a straight line $L_{OA}$ connecting the center point O and the point A which is the position of the preceding vehicle 3 with the estimated centerline E which is an arc of the virtual circle. $\theta_{POQ}$ represents an intersection angle between a straight line $L_{OP}$ and a straight line $L_{OQ}$, and $\theta_{OAB}$ represents an intersection angle between the straight line $L_{OB}$ and the straight line $L_{AB}$. The straight line $L_{OP}$ is parallel to the straight line $L_{AB}$.

In this case, the intersection angle $\theta_{POQ}$ is equal to $\theta_{OAB}$, and thus Expression (10) below is satisfied.
[Math. 9]

$$\theta_{POQ} = \theta_{AOB} = \arccos\left(\frac{AB}{OA}\right) \cdots (10)$$

A length of an arc PQ of the virtual circle having the curvature radius R satisfies Expression (11) below.
[Math. 10]

$$\mathrm{arc}PQ = |R| \bullet \arccos\left(\frac{AB}{OA}\right)$$

$$= |R| \bullet \arccos\left(\frac{|R| - |L_X|}{\left[L_Y^2 + \left(|R| - |L_X|\right)^2\right]^{0.5}}\right) \cdots (11)$$

Expressions (1) and (11) above are applied to a map, and thereby it is possible to convert the position A of the preceding vehicle 3 to a position in the second coordinate system in which the straight line $L_{PC}$ extending in the straight traveling direction Y is used as a reference, as illustrated in FIG. 7(b). The inter-vehicular distance calculation unit 35 of the cruise ECU 25 sets the arc PQ (= $L_{PQ}$) calculated from Expression (11) as the inter-vehicular distance D (refer to FIG. 1) between the host vehicle 2 and the preceding vehicle 3.

The coordinate conversion unit 33 determines whether the curved road has the right-hand curve or the left-hand curve based on a sign (+ or -) of a signal indicating a horizontal position of the preceding vehicle 3 detected by the radar sensor 12.

For example, when the sign of the signal indicating the horizontal position of the preceding vehicle 3 detected by the radar sensor 12 is "+" ($L_X > 0$), the coordinate conversion unit determines that the curved road has the right-hand curve. When the sign is "-" ($L_X < 0$), the coordinate conversion unit determines that the curved road has the left-hand curve.

As a result of calculation of Expression (1) above, when m > 0, the coordinate conversion unit 33 determines that the preceding vehicle 3 is present on an outer side of the curve ($A_1$ and $A_3$). When m < 0, the coordinate conversion unit 33 determines that the preceding vehicle 3 is present on an inner side of the curve ($A_2$ and $A_4$). When m = 0, the coordinate conversion unit 33 determines that the preceding vehicle 3 is present on the estimated centerline E.

The coordinate conversion unit 33 converts a position of the preceding vehicle 3 that is present at the point $A_1$ at which $L_X > 0$ and m > 0 to a position of the point $C_1$ in the second coordinate system ($L_X \times$ m > 0), for example. The coordinate conversion unit 33 converts a position of the preceding vehicle 3 that is present at the point $A_2$ at which $L_X > 0$ and m < 0 to a position of the point $C_2$ in the second coordinate system ($L_X \times$ m < 0), for example.

The coordinate conversion unit 33 converts the position of the preceding vehicle 3 that is present at the point $A_3$ at which $L_X < 0$ and m > 0 to a position of the point $C_1$ in the second coordinate system ($L_X \times$ m > 0), for example. The coordinate conversion unit 33 converts a position of the preceding vehicle 3 that is present at the point $A_4$ at which $L_X < 0$ and m < 0 to a position of the point $C_2$ in the second coordinate system ($L_X \times$ m < 0), for example.

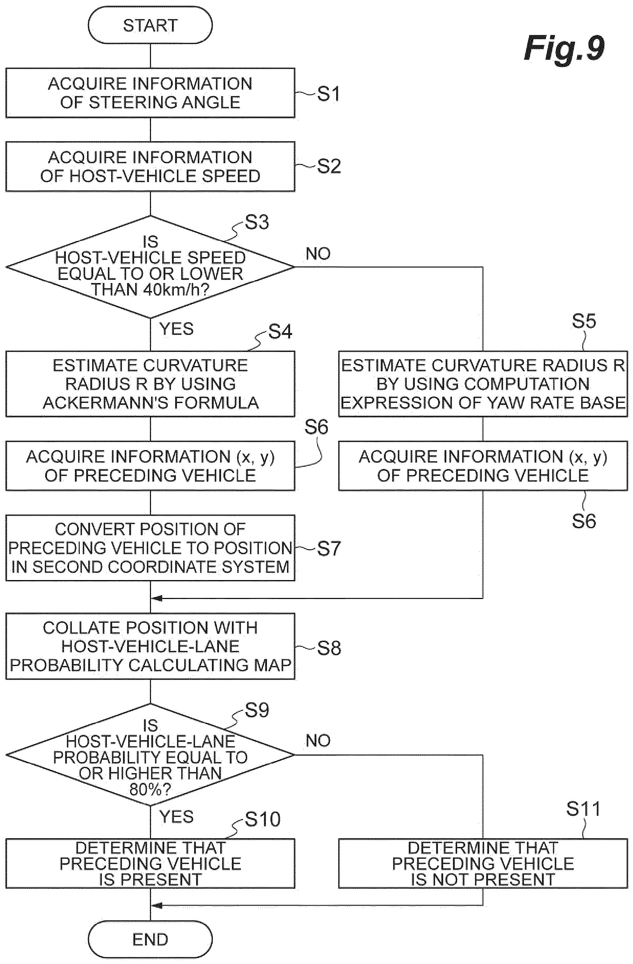

Next, a process procedure in the vehicle control system 1 will be described with reference to a flowchart in FIG. 9. First, the cruise ECU 25 acquires information of the steering angle of the host vehicle 2 output from the steering angle sensor 14 (Step S1).

Next, the cruise ECU 25 acquires information of the host-vehicle speed output from the vehicle speed sensor 11 (Step S2). Next, the vehicle speed determination unit 31 of the cruise ECU 25 determines whether or not the host-vehicle speed is equal to or lower than 40 km/h (Step S3). When the host-vehicle speed is equal to or lower than 40 km/h, the process proceeds to Step S4. When the host-vehicle speed is higher than 40 km/h, the process proceeds to Step S5.

In Step S4, the curvature-radius estimation unit 32 of the cruise ECU 25 estimates the curvature radius R by using Ackermann's formula. Specifically, the curvature-radius estimation unit 32 calculates the curvature radius R from the wheel base $L_{WB}$ and the steering angle $\theta_S$ of the host vehicle 2 by using Expression (4).

The cruise ECU 25 executes Step S6 after Step S4. In Step S6, the cruise ECU 25 acquires information (x, y) related to the position of the preceding vehicle 3 output from the radar sensor 12.

Subsequently, in Step S7, the coordinate conversion unit 33 of the cruise ECU 25 converts the position of the preceding vehicle 3 to the position in the second coordinate system in which the straight line $L_{PC}$ along the straight traveling direction Y is used as a reference. Specifically, the coordinate conversion unit 33 calculates the distance m by using Expression (1). The coordinate conversion unit 33 calculates the arc PQ by using Expression (11).

The coordinate conversion unit 33 calculates the second distance $L_X$ (= x) based on positional information (x, y) of the preceding vehicle 3. As illustrated in FIG. 7, the coordinate conversion unit 33 converts the points $A_1$ and $A_4$ indicating the positions of the preceding vehicle 3 to the point $C_1$ and converts the points $A_2$ and $A_3$ indicating the positions of the preceding vehicle 3 to the point $C_2$. The cruise ECU 25 allows the process to proceed to Step S8 after Step S7.

On the other hand, when the host-vehicle speed is higher than 40 km/h in Step S3, the process proceeds to Step S5. In Step S5, the curvature-radius estimation unit 32 of the cruise ECU 25 calculates the curvature radius R of the curved road, on which the host vehicle 2 is traveling, by using a computation expression of a yaw rate base as in the related art. The cruise ECU 25 executes Step S6 after Step S5 and allows the process to proceed to Step S8.

In Step S8, the host-vehicle-lane probability calculation unit 34 of the cruise ECU 25 collates the positions $C_1$ and $C_2$ of the preceding vehicle 3 in the second coordinate system with the host-vehicle-lane probability calculating map $M_1$ (or $M_2$) (Step S8). From a result of collation, the host-vehicle-lane probability calculation unit 34 reads a corresponding numerical value on the host-vehicle-lane probability calculating map $M_1$ and sets the numerical value as the host-vehicle-lane probability of the preceding vehicle 3.

Subsequently, in Step S9, the host-vehicle-lane probability calculation unit 34 of the cruise ECU 25 determines whether or not the host-vehicle-lane probability is equal to or higher than 80%. When the host-vehicle-lane probability is equal to or higher than 80%, the cruise ECU 25 allows the process to proceed to Step S10 and determines that the preceding vehicle is present on the host-vehicle lane. When the host-vehicle-lane probability is lower than 80%, the cruise ECU 25 allows the process to proceed to Step S11 and determines that the preceding vehicle is not present on the host-vehicle lane. Here, the process is ended.

When the preceding vehicle 3 is present on the host-vehicle lane, the vehicle control ECU 24 of the vehicle control system 1 controls the inter-vehicular distance between the host vehicle 2 and the preceding vehicle 3 and performs control of maintaining the host-vehicle speed at the constant speed. For example, the vehicle control system 1 executes the constant speed traveling control and the inter-vehicular distance control in the entire vehicle speed range regardless of the host-vehicle speed.

The cruise ECU 25 of the vehicle control system 1 of the embodiment includes the vehicle speed determination unit 31 and estimates the curvature radius R of the road, on which the host vehicle 2 is traveling, based on the steering angle $\theta_S$, when the host-vehicle speed is equal to or lower than the determination threshold value. Consequently, it is possible to estimate the curvature radius R without using the yaw rate. When the host-vehicle speed is equal to or lower than the determination threshold value, it is possible to estimate the curvature radius R of the road, on which the host vehicle is traveling, based on the steering angle $\theta_S$ while it is possible to limit an influence of an error. The coordinate conversion unit 33 of the cruise ECU 25 converts the position of the preceding vehicle 3 to the position in the second coordinate system. The position in the second coordinate system is obtained with the straight line $L_{PC}$ along the straight traveling direction Y of the host vehicle 2 as a reference. Therefore, it is possible to significantly reduce a computation load more than in the case of converting the entire coordinate system as in the related art.

The radar sensor 12 of the vehicle control system 1 detects the first distance $L_Y$ from the host vehicle to the preceding vehicle 3 in the straight traveling direction of the host vehicle 2 and the second distance $L_X$ from the host vehicle 2 to the preceding vehicle 3 in the vehicle width direction X orthogonal to the straight traveling direction Y. The coordinate conversion unit 33 calculates the distance m between the preceding vehicle 3 and the tangential line $L_{QT}$ of the curve (estimated centerline E) corresponding to the curvature radius R, the curve passing through the center of the host vehicle 2 in the vehicle width direction X. The host-vehicle-lane probability calculation unit 34 calculates the probability that the preceding vehicle 3 is present on the host-vehicle lane, based on the distance m. Consequently, in the vehicle control system 1, it is possible to calculate the probability that the preceding vehicle 3 is present on the host-vehicle lane and reduce the computation load, based on the second distance $L_X$ from the host vehicle 2 to the preceding vehicle 3 in the vehicle width direction X.

The coordinate conversion unit 33 of the cruise ECU 25 calculates the distance m by using Expression (1) below. Therefore, in the coordinate conversion unit 33, it is possible to reduce the computation load more than in the case of converting the entire coordinate system as in the related art and calculate the probability that the preceding vehicle 3 is present on the host-vehicle lane.

[Math. 11]

$$m = \left[L_Y^2 + \left(|R| - |L_X|\right)^2\right]^{0.5} - |R| \cdots \quad (1)$$

The host vehicle 2 includes the engine retarder. The vehicle control ECU 24 can control the engine retarder to decelerate the host vehicle 2. Consequently, it is possible to appropriately maintain the inter-vehicular distance between the host vehicle 2 and the preceding vehicle 3. As a result, it is possible to reduce wear of the brake shoe during deceleration of the host vehicle 2.

The invention is not limited to the above-described embodiment, and it is possible to perform various modifications as follows, in a range without departing from the gist of the invention.

For example, in the above-described embodiment, a configuration, in which the radar sensor 12 is included, is described as a preceding-vehicle detection sensor that detects the position of the preceding vehicle 3 ahead of the host vehicle 2; however, the preceding-vehicle detection sensor is not limited to the radar sensor 12. For example, the positional information of the preceding vehicle may be acquired by using an in-vehicle camera (image sensor), inter-vehicle communication, or the like.

In the above-described embodiment, the low speed determination unit determines whether or not the host-vehicle speed is equal to or lower than 40 km/h (determination threshold value); however, the determination threshold value is not limited to 40 km/h and may be a different vehicle speed. For example, the determination threshold value may be a value that is lower than 40 km/h or higher than 40 km/h. For example, the determination threshold value can be set based on an experiment or data obtained in the past.

In the above-described embodiment, the probability that the preceding vehicle 3 is present on the host-vehicle lane is calculated by using the host-vehicle-lane probability calculating maps. However, the host-vehicle-lane probability may be calculated by a calculation process based on the position of the preceding vehicle 3, for example.

**Reference Signs List**

1: vehicle control system (preceding-vehicle determination apparatus), 2: host vehicle, 3: preceding vehicle, 5: host-vehicle lane, 11: vehicle speed sensor, 12: radar sensor (preceding-vehicle detection sensor), 14: steering angle sensor, 24: vehicle control ECU, 25: cruise ECU, 31: vehicle speed determination unit (low speed determination unit), 32: curvature-radius estimation unit, 33: coordinate conversion unit, 34: host-vehicle-lane probability calculation unit (preceding-vehicle presence/absence determination unit), $L_{QT}$: tangential line, $L_X$: second distance, $L_Y$: first distance, X: vehicle width direction, Y: straight traveling direction.

**Claims**

1. A preceding-vehicle determination apparatus comprising:

   a vehicle speed sensor that detects a speed of a host vehicle;
   a preceding-vehicle detection sensor that detects a position of a preceding vehicle ahead of the host vehicle;
   a steering angle sensor that detects a steering angle of the host vehicle;
   a low speed determination unit that determines whether or not the vehicle speed of the host vehicle detected by the vehicle speed sensor is equal to or lower than a determination threshold value;
   a curvature-radius estimation unit that estimates a curvature radius R of a road, on which the host vehicle is traveling, based on the steering angle, when the vehicle speed is equal to or lower than the determination threshold value;
   a coordinate conversion unit that converts, based on the curvature radius R, the position of the preceding vehicle in a first coordinate system in which a curve corresponding to the curvature radius R is used as a reference to a position in a second coordinate system in which a straight line along a straight traveling direction of the host vehicle is used as a reference; and
   a host-vehicle-lane probability calculation unit that calculates a probability that the preceding vehicle is present in a host-vehicle lane, based on the position of the preceding vehicle in the second coordinate system.

2. The preceding-vehicle determination apparatus according to claim 1,
   wherein the preceding-vehicle detection sensor detects a first distance $L_Y$ from the host vehicle to the preceding vehicle in the straight traveling direction of the host vehicle and a second distance $L_X$ from the host vehicle to the preceding vehicle in a vehicle width direction orthogonal to the straight traveling direction,
   wherein the coordinate conversion unit calculates a distance m between the preceding vehicle and the curve corresponding to the curvature radius R, the curve passing through a center of the host vehicle in the vehicle width direction, and
   wherein the host-vehicle-lane probability calculation unit calculates a probability that the preceding vehicle is present on the host-vehicle lane, based on the distance m.

3. The preceding-vehicle determination apparatus according to claim 2,
   wherein the coordinate conversion unit calculates the distance m by using Expression (1) below.
   [Math. 1]

$$m = \left[ L_Y{}^2 + \left( |R| - |L_X| \right)^2 \right]^{0.5} - |R| \cdots \ (1)$$

4. A vehicle control system comprising:

   the preceding-vehicle determination apparatus according to any one of claims 1 to 3;
   a preceding-vehicle presence/absence determination unit that determines whether or not the preceding vehicle is present on the host-vehicle lane, depending on a probability that the preceding vehicle is present on the host-vehicle lane; and
   a vehicle control unit that controls an inter-vehicular distance between the preceding vehicle and the host vehicle, when the preceding vehicle is present on the host-vehicle lane.

5. The vehicle control system according to claim 4,
   wherein the host vehicle includes an engine retarder, and
   wherein the vehicle control unit controls the engine retarder to decelerate the host vehicle and control the inter-vehicular distance.

Fig.1

*Fig.2*

# Fig.3

1

4

| 11 | VEHICLE SPEED SENSOR | ←→ |
|---|---|---|

ENGINE ECU —21

| 12 | RADAR SENSOR | → |
|---|---|---|

TRANSMISSION ECU —22

| 13 | YAW RATE SENSOR | → |
|---|---|---|

EBS／ABS ECU —23

| 14 | STEERING ANGLE SENSOR | → |
|---|---|---|

VEHICLE CONTROL ECU —24

| 15 | IMAGE SENSOR | → |
|---|---|---|

CRUISE ECU —25

| 16 | G/GRADIENT SENSOR | → |
|---|---|---|

# Fig.4

25

CRUISE ECU

| VEHICLE SPEED DETERMINATION UNIT | 31 |

| CURVATURE-RADIUS ESTIMATION UNIT | 32 |

| COORDINATE CONVERSION UNIT | 33 |

| HOST-VEHICLE-LANE PROBABILITY CALCULATION UNIT | 34 |

| INTER-VEHICULAR DISTANCE CALCULATION UNIT | 35 |

| STORAGE UNIT | 36 |

Fig.5

## Fig.6

# *Fig.7*

(a)

(b)

# Fig.8

(a)

$M_1$

| 0 | 60 | 80 | 100 | 60 | 00 |

| 0 | 60 | 80 | 100 | 60 | 00 |

| 0 | 60 | 80 | 100 | 60 | 00 |

| 0 | 60 | 80 | 100 | 60 | 00 |

$L_{PC}$

2

(b)

$M_2$

| 0 | 00 | 60 | 100 | 60 | 00 |

| 0 | 00 | 60 | 100 | 60 | 00 |

| 0 | 00 | 60 | 100 | 60 | 00 |

| 0 | 00 | 60 | 100 | 60 | 00 |

$L_{PC}$

2

Y

X

EP 3 604 067 A1

**Fig.9**

```
                    ┌─────────────┐
                    │    START    │
                    └──────┬──────┘
                           │
              ┌────────────────────────┐
              │   ACQUIRE INFORMATION  │──S1
              │    OF STEERING ANGLE   │
              └────────────┬───────────┘
                           │
              ┌────────────────────────┐
              │   ACQUIRE INFORMATION  │──S2
              │  OF HOST-VEHICLE SPEED │
              └────────────┬───────────┘
                           │
                         ╱   ╲   S3
                       ╱  IS   ╲
                     ╱ HOST-VEHICLE╲  NO
                    ⟨ SPEED EQUAL TO⟩────────────────┐
                     ╲ OR LOWER    ╱                  │
                       ╲THAN 40km/h╱                  │
                         ╲   ╱                         │
                          │ YES      S4                │  S5
              ┌────────────────────────┐  ┌────────────────────────┐
              │   ESTIMATE CURVATURE   │  │ ESTIMATE CURVATURE RADIUS R│
              │     RADIUS R BY USING  │  │   BY USING COMPUTATION  │
              │   ACKERMANN'S FORMULA  │  │EXPRESSION OF YAW RATE BASE│
              └────────────┬───────────┘  └────────────┬───────────┘
                           │         S6                │
              ┌────────────────────────┐  ┌────────────────────────┐
              │  ACQUIRE INFORMATION   │  │  ACQUIRE INFORMATION   │
              │  (x, y) OF PRECEDING   │  │  (x, y) OF PRECEDING   │
              │       VEHICLE          │  │       VEHICLE          │
              └────────────┬───────────┘  └────────────┬───────────┘
                           │                            │  S6
              ┌────────────────────────┐                │
              │  CONVERT POSITION OF   │                │
              │ PRECEDING VEHICLE TO   │──S7            │
              │ POSITION IN SECOND     │                │
              │ COORDINATE SYSTEM      │                │
              └────────────┬───────────┘                │
                           │◄───────────────────────────┘
              ┌────────────────────────┐
              │  COLLATE POSITION WITH │
              │    HOST-VEHICLE-LANE   │──S8
              │ PROBABILITY CALCULATING│
              │          MAP           │
              └────────────┬───────────┘
                           │            S9
                         ╱   ╲
                       ╱  IS   ╲
                     ╱HOST-VEHICLE╲  NO
                    ⟨LANE PROBABILITY⟩──────────────┐
                     ╲EQUAL TO OR  ╱                 │
                       ╲HIGHER THAN╱                  │
                         ╲80%? ╱                      │
                          │ YES      S10              │  S11
              ┌────────────────────────┐  ┌────────────────────────┐
              │    DETERMINE THAT      │  │    DETERMINE THAT      │
              │  PRECEDING VEHICLE     │  │  PRECEDING VEHICLE     │
              │     IS PRESENT         │  │    IS NOT PRESENT      │
              └────────────┬───────────┘  └────────────┬───────────┘
                           │◄───────────────────────────┘
                    ┌─────────────┐
                    │     END     │
                    └─────────────┘
```

## INTERNATIONAL SEARCH REPORT

| International application No. |
|---|
| PCT/JP2018/002561 |

**A. CLASSIFICATION OF SUBJECT MATTER**
Int. Cl. B60W30/16(2012.01)i, B60W40/072(2012.01)i

According to International Patent Classification (IPC) or to both national classification and IPC

**B. FIELDS SEARCHED**

Minimum documentation searched (classification system followed by classification symbols)
Int. Cl. B60W30/00-50/16, B60K31/00-31/18, G08G1/00-99/00, B60T7/12-8/1769, B60T8/32-8/96, B60R21/00-21/017, B62D6/00-6/10, F02D29/00-29/06

Documentation searched other than minimum documentation to the extent that such documents are included in the fields searched
Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-093098 A (DENSO CORP.) 06 April 2001, paragraphs [0001], [0048], [0056]-[0067] (Family: none) | 1-5 |
| Y | WO 2010/084591 A1 (TOYOTA MOTOR CORP.) 29 July 2010, paragraphs [0035], [0051], [0063] & US 2011/0270466 A1, paragraphs [0062], [0078], [0090] & EP 2380794 A1 | 1-5 |
| Y | WO 2005/020183 A1 (HITACHI, LTD.) 03 March 2005, description, page 7, lines 7-18, fig. 4 & AU 2003262253 A | 1-5 |
| Y | JP 2002-175599 A (HITACHI, LTD.) 21 June 2002, paragraphs [0019]-[0025], fig. 4 (Family: none) | 1-5 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 03.04.2018 | 17.04.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/002561 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2000-038050 A (HINO MOTORS, LTD.) 08 February 2000, paragraphs [0009], [0023] (Family: none) | 5 |
| Y | JP 2009-149173 A (MITSUBISHI FUSO TRUCK AND BUS CORP.) 09 July 2009, paragraphs [0017]-[0020] (Family: none) | 5 |
| A | JP 2006-098983 A (NIPPON SEIKI CO., LTD.) 13 April 2006, paragraphs [0042], [0043], fig. 10, 11 (Family: none) | 1-5 |
| A | JP 2005-140749 A (TOYOTA MOTOR CORP.) 02 June 2005, paragraph [0029] (Family: none) | 1-5 |
| A | JP 2004-217178 A (TOYOTA MOTOR CORP.) 05 August 2004, paragraphs [0057], [0109] & US 2004/0143416 A1, paragraphs [0100]-[0106], [0166] & EP 1439442 A2 | 1-5 |
| A | JP 2007-331608 A (TOYOTA MOTOR CORP.) 27 December 2007, paragraphs [0001], [0034], [0086], [0101]-[0111] (Family: none) | 1-5 |

Form PCT/ISA/210 (continuation of second sheet) (January 2015)

**EP 3 604 067 A1**

**REFERENCES CITED IN THE DESCRIPTION**

**Patent documents cited in the description**

- JP 2007253714 A